Europäisches Patentamt

European Patent Office

Office européen des brevets

(19)

(11) Numéro de publication : **0 145 532**
**B1**

(12)                    **FASCICULE DE BREVET EUROPÉEN**

(45) Date de publication du fascicule du brevet :
24.01.90

(51) Int. Cl.⁵ : **G 01 L   1/18**

(21) Numéro de dépôt : 84402128.7

(22) Date de dépôt : 23.10.84.

(54) **Dispositif piézométrique et thermométrique permettant d'effectuér une mesure matricielle de pression et de température.**

(30) Priorité : 25.10.83 FR 8317215

(43) Date de publication de la demande :
19.06.85 Bulletin 85/25

(45) Mention de la délivrance du brevet :
24.01.90 Bulletin 90/04

(84) Etats contractants désignés :
BE CH DE GB LI

(56) Documents cités :
GB—A— 2 042 188
GB—A— 2 137 022

(73) Titulaire : **Didier, Jean-Pierre**
**Rue Carré**
**F-21160 Marsannay-La-Cote (FR)**

**Roche, Michel**
**12, rue de Saulx-Tavannes**
**F-21000 Dijon (FR)**

(72) Inventeur : **Didier, Jean-Pierre**
**Rue Carré**
**F-21160 Marsannay-La-Cote (FR)**
Inventeur : **Roche, Michel**
**12, rue de Saulx-Tavannes**
**F-21000 Dijon (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention concerne tous les appareillages (médicaux, peau artificielle, etc...), où une mesure de pression et subsidiairement une mesure de température doit être réalisée en de très nombreux points, rendant ainsi nécessaire l'emploi d'une méthode matricielle pour limiter le nombre de fils nécessaires à l'alimentation des capteurs.

Des tentatives ont déjà été réalisées ; elles mettaient en œuvre des procédés optiques enregistrant la déformation d'un élastomère ou des procédés électriques utilisant des variations de capacité par écrasement d'un condensateur.

On a également tenté d'utiliser une transposition de la technique très répandue des jauges de contrainte piézorésistives en remplaçant le métal par des conducteurs élastomères, placés dans un réseau plan.

Ces dispositifs présentent l'inconvénient soit d'être très difficiles à mettre en œuvre comme c'est le cas des procédés optiques ou à capacité variable, soit d'effectuer une mesure erronée due à la présence de contraintes latérales ou à l'effet de la température.

On pourra se reporter par ailleurs à un autre exemple d'art antérieur constitué par la demande de brevet GB-20 42188 qui décrit un élément sensible à la pression, et une matrice formée de tels éléments, le contenu de ce document constituant le préambule de la revendication 1.

L'invention propose donc un tel dispositif matriciel pour la mesure d'une distribution de pression sur une surface quelconque qui est caractérisé selon la revendication 1 en ce que ces éléments sensibles à la pression sont des éléments piézorésistifs, en ce que ladite diode est une diode Zener et en ce que est ajouté au réseau piézorésistif un autre réseau, mais cette fois à éléments thermorésistifs, fonctionnant de façon analogue mais utilisant comme élément sensible $(D_{i,j})$ des thermistances ou tout élément résistif sensible à la température, ce qui permet de corriger la mesure de pression des effets de la température.

Le dispositif suivant l'invention, qui utilise des jauges de contrainte en élastomère placées dans un réseau matriciel tridimensionnel, permet donc d'éviter ces inconvénients.

L'invention sera de toute façon mieux comprise à partir d'un premier mode préféré de réalisation, donné ici à titre indicatif et, bien entendu, nullement limitatif.

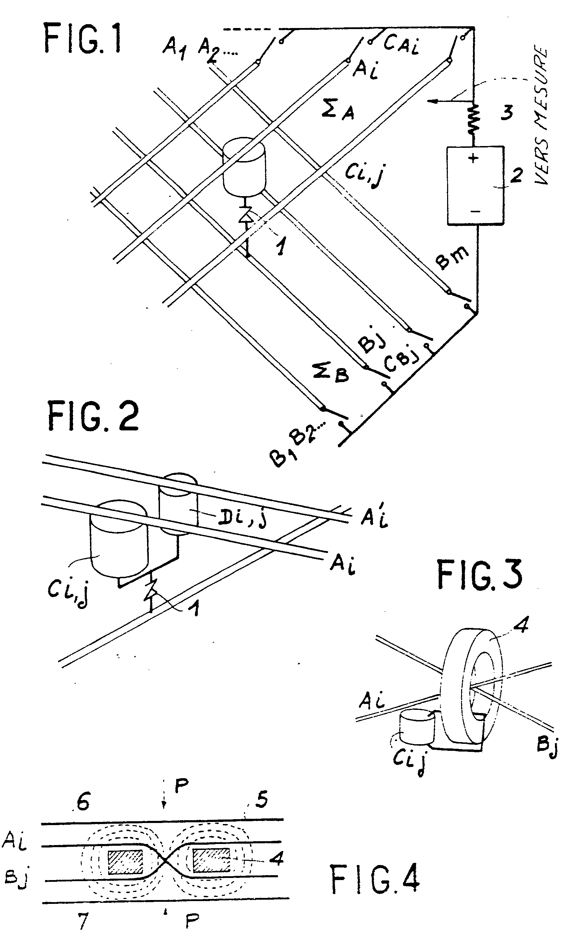

Un élément piézorésistif $C_{i,j}$ (voir figure 1) est constitué en un matériau conducteur qui est à la fois déformable et élastique. On conviendra de l'appeler élastomère conducteur. Il est placé à l'intersection de deux fils conducteurs $A_i$ et $B_j$, appartenant respectivement à des réseaux $A_1$, $A_2$ ... $A_i$ ... $A_n$ et $B_1$, $B_2$ ... $B_j$ ... $B_m$, rectangulaires entre eux et placés sur des surfaces A ou B parallèles entre elles.

La déformation de $C_{i,j}$ entraîne une variation de sa résistance (elle diminue lorsque l'élément est écrasé). On utilise cette propriété pour mesurer en chaque point i, j, de la surface A ou B la pression qui lui est appliquée. Cette mesure de résistance utilise une alimentation 2 en série de laquelle une résistance 3 permet une détection du courant débité dans le circuit de mesure qui comporte les éléments suivants, placés en série :

— des commutateurs $C_{Ai}$ et $C_{Bj}$, constitués par exemple par des transistors à effet de champ, dont on assure la mise en conduction par un adressage logique suivant une technique très connue, dite de « multiplexage ». L'ensemble des éléments du circuit existe dans le commerce sous forme de circuits intégrés.

— L'élément piézorésistif $C_{i,j}$ qui est traversé par un courant perpendiculaire à $\Sigma_A$ ou $\Sigma_B$.

— Une diode zéner 1 ayant un seuil de l'ordre de la moitié de la tension d'alimentation dont le rôle est de permettre la sélection d'une seule résistance, celle de l'élément $C_{ij}$.

Le pilotage des commutateurs et le traitement de la mesure de courant issu de 3 qui est numérisée sont effectués par un processeur en ligne.

Suivant un deuxième mode préféré de réalisation de l'invention, on utilise un élément thermosensitif $D_{i,j}$ associé à l'élément piézorésistif $C_{i,j}$, afin de corriger les erreurs qui pourraient être introduites dans la mesure de pression du fait que les matériaux élastomère conducteur présentent un coefficient de température souvent très élevé.

La mesure s'effectue comme précédemment en utilisant le réseau $B_1$, $B_2$... $B_j$... $B_m$ qui reste commun aux deux mesures, et un nouveau réseau $A_1'$, $A_2'$... $A_i'$... $A_n'$ équipé de commutateurs $C_{A'1}$, $C_{A'2}$, $C_{A'i}$... $C_{A'n}$ correspondants.

Les diodes zéner sont également communes aux deux réseaux de mesure, comme on peut le voir sur la figure 2.

Suivant un troisième mode de réalisation de l'invention, on remplace l'élément non linéaire du circuit que constituait la diode zéner 1, dont le rôle, on l'a vu, était de limiter le passage du courant de mesure à un seul élément $C_{i,j}$, par un tore de ferrite 4 présentant un cycle rectangulaire.

On modifie les commutateurs pour qu'ils permettent d'alimenter le transformateur que constitue le tore de ferrite 4 placé à l'intersection de $A_i$ et de $B_j$ au moins une fois dans un sens (par exemple $A_i$ au + et $B_j$ au —) et au moins une fois en sens inverse (par exemple $A_i$ au — et $B_j$ au +).

Comme le montre la figure 3, les conducteurs $A_i$ et $B_j$ passent au travers du tore de ferrite 4. Ils constituent ainsi un double primaire.

L'élément piézorésistif $C_{ij}$ constitue quant à lui le secondaire.

La durée d'application de la tension au primaire pour chaque polarité d'alimentation est soigneusement déterminée, compte tenu de la valeur de cette tension d'alimentation pour que :

— Si un seul conducteur ($A_i$ ou $B_j$) est alimenté, le champ magnétique appliqué au tore 4 reste inférieur au champ coercitif. De ce fait, l'induction ne bascule pas, et le secondaire ne reçoit aucune tension.

— Si deux conducteurs ($A_i$ et $B_j$) sont alimentés, le champ appliqué au tore 4 est supérieur au champ coercitif. Il en résulte un basculement de l'induction et le secondaire est alimenté et débite un courant qui est fonction de la résistance de l'élément piézorésistif. Ce courant est prélevé au primaire et peut être lu comme précédemment aux bornes de l'alimentation, et traité en conséquence.

On a représenté sur la figure 4 une des très nombreuses variantes de secondaire possibles utilisant un élément piézorésistif liquide, donnée à titre indicatif et nullement limitative.

Le tore 4 est traversé par les conducteurs $A_i$ et $B_j$. Lorsque les parois 6 et 7 de la capsule qui emprisonne le liquide conducteur se rapprochent, elles chassent le liquide et étranglent les lignes de courant 5, d'où une augmentation de la résistance.

Le liquide conducteur peut être un électrolyte, un métal liquide, ou une suspension colloïdale quelconque.

L'invention peut être appliquée à la mesure des pressions exercées sur le corps humain pour différents traitements médicaux : prothèses, alitement, etc... Elle peut également être utilisée en robotique comme peau artificielle pour la détection tactile et thermique.

## Revendications

1. Dispositif matriciel de mesure d'une distribution de pression sur une surface quelconque, plane ou non, comportant des éléments sensibles à la pression, constitués d'un conducteur déformable ($C_{i,j}$), placé entre deux nappes de conducteurs ($A_1$, $A_2$... $A_i$... $A_n$ ; $B_1$, $B_2$... $B_j$... $B_m$) portées par deux surfaces parallèles ($\Sigma_A$ ; $\Sigma_B$) sur lesquelles s'exerce la pression à mesurer de telle sorte qu'il soit relié par l'intermédiaire d'une diode en série à un premier point de la première nappe de conducteurs ($A_1$, $A_2$... $A_i$... $A_n$) et à un second point de la deuxième nappe de conducteurs ($B_1$, $B_2$... $B_j$... $B_m$), et que le courant qui le traverse avec une direction sensiblement perpendiculaire à ces deux surfaces parallèles ($\Sigma_A$ ; $\Sigma_B$) soit utilisé, en relation avec la tension appliquée au circuit, pour mesurer la résistance de l'élément sensible à la pression constitué par ledit conducteur déformable ($C_{i,j}$) et par la suite la pression appliquée sur ce même élément ; et en ce que la séquence de mesure de la pression aux différents points de l'élément sensible à la pression constitué par ledit conducteur déformable ($C_{i,j}$) est réalisée à l'aide d'interrupteurs électroniques ($C_{Ai}$ ; $C_{Bi}$), utilisant par exemple la technologie MOS et qui sont commandés par multiplexage, de sorte que tous les éléments sensibles à la pression constitués par ledit conducteur déformable ($C_{i,j}$) soient alternativement reliés aux bornes d'une l'alimentation (2) avec en série une résistance (3) qui permet la mesure du courant débité ; caractérisé en ce que ces éléments sensibles à la pression sont des éléments piézorésistifs, en ce que ladite diode est une diode Zéner et en ce que est ajouté au réseau piézorésistif un autre réseau, mais cette fois à éléments thermorésistifs, fonctionnant de façon analogue mais utilisant comme élément sensible ($D_{i,j}$) des thermistances ou tout autre élément résistif sensible à la température, ce qui permet de corriger la mesure de pression des effets de la température.

2. Dispositif suivant la revendication 1, caractérisé en ce que l'élément piézorésistif ($C_{i,j}$) est relié à un transformateur ayant un noyau à cycle rectangulaire, dont le bobinage primaire est constitué par les conducteurs ($A_i$ et $B_j$) convenablement alimentés par des impulsions rectangulaires d'amplitudes calibrées, de telle sorte que la présence d'impulsions sur un seul de ces deux conducteurs soit insuffisante pour provoquer le basculement de l'aimentation du noyau, et dont le bobinage secondaire est constitué par l'élément piézorésistif dont la résistance est mesurée par le courant débité dans le circuit ($A_i$, $B_j$) au moment du basculement de l'aimantation du noyau et dont la valeur permet d'obtenir la pression exercée au point de coordonnée ($C_{i,j}$).

3. Dispositif suivant les revendications 1 ou 2, caractérisé en ce qu'il est utilisé à des fins médicales consistant en l'analyse des pressions et des températures présentes au contact d'un corps humain.

4. Dispositif suivant les revendications 1, 2 ou 3, caractérisé en ce qu'il est utilisé en robotique, comme peau artificielle, sensible aussi bien à la pression qu'à la température.

5. Dispositif suivant la revendication 1 ou 2, caractérisé en ce que l'élément piézorésistif est constitué par un élastomère conducteur.

6. Dispositif suivant la revendication 1 ou 2, caractérisé en ce que l'élément piézorésistif est constitué d'un liquide conducteur placé dans une enveloppe élastique.

7. Dispositif suivant la revendication 2, caractérisé en ce que le secondaire du transformateur à tore de ferrite est constitué par un liquide conducteur dans lequel ledit tore est immergé.

## Claims

1. Matrix device for measuring a pressure distribution on any plane or non-plane surface, comprising pressure-sensitive elements, consisting of a deformable conductor ($C_{i,j}$) placed between two layers of conductors ($A_1$, $A_2$... $A_i$... $A_n$ ; $B_1$, $B_2$... $B_j$... $B_m$) carried by two parallel surfaces ($\Sigma_A$ ; $\Sigma_B$) on which the pressure to be measured is exerted, in such a manner that it is connected via a diode in series to a first point of the first layer of conductors ($A_1$, $A_2$... $A_i$... $A_n$) and to a second point of the second layer of conductors ($B_1$, $B_2$... $B_j$... $B_m$), and that the current which passes through it with a direction substantially perpendicular to these two parallel surfaces ($\Sigma_A$ ; $\Sigma_B$) is

used, in relation to the voltage applied to the circuit, to measure the resistance of the pressure-sensitive element consisting of the said deformable conductor $(C_{i,j})$ and consequently the pressure applied to this same element; and in that the sequence of measurement of the pressure at the various points of the pressure-sensitive element consisting of the said deformable conductor $(C_{i,j})$ is performed by means of electronic switches $(C_{Ai}; C_{Bi})$, using, for example, MOS technology and which are controlled by multiplexing, in such a manner that all the pressure-sensitive elements constituted by the said deformable conductor $(C_{i,j})$ are alternately connected to the terminals of a power supply (2), with, in series, a resistor (3) which permits the measurement of the current passed through; characterized in that these pressure-sensitive elements are piezoresistive elements, in that the said diode is a Zener diode, and in that there is added to the piezoresistive network another network, but this time comprising thermoresistive elements, operating in a similar manner but using as sensitive element $(D_{i,j})$ thermistors or any other temperature-sensitive resistive element, which permits the correction of the pressure measurement for the effects of temperature.

2. Device according to Claim 1, characterized in that the piezoresistive element $(C_{i,j})$ is connected to a transformer having a core with a rectangular cycle, the primary winding of which is constituted by the conductors $(A_i$ and $B_j)$ appropriately supplied by rectangular pulses of calibrated amplitudes, in such a manner that the presence of pulses on only one of these two conductors is insufficient to cause the switching-over of the magnetization of the core, and the secondary winding of which is constituted by the piezoresistive element, the resistance of which is measured by the current passed through in the circuit $(A_i, B_j)$ at the moment of the switching-over of the magnetization of the core and the value of which permits the obtaining of the pressure exerted at the point of coordinate $(C_{i,j})$.

3. Device according to Claim 1 or 2, characterized in that it is used for medical purposes consisting in the analysis of the pressures and of the temperatures present in contact with a human body.

4. Device according to Claim 1, 2 or 3, characterized in that it is used in robotics, as artificial skin, sensitive both to pressure and to temperature.

5. Device according to Claim 1 or 2, characterized in that the piezoresistive element consists of a conductive elastomer.

6. Device according to Claim 1 or 2, characterized in that the piezoresistive element consists of a conductive liquid placed in an elastic envelope.

7. Device according to Claim 2, characterized in that the secondary of the transformer including a ferrite torus consists of a conductive liquid in which the said torus is immersed.

**Patentansprüche**

1. Matrixvorrichtung zur Messung einer Druckverteilung auf einer jedweden Oberfläche, eben oder nicht, mit druckempfindlichen Elementen, die aus einem verformbaren Leiter $(C_{i,j})$ gebildet sind, der zwischen Flächen oder Bahnen von Leitern $(A_1, A_2... A_i... A_n; B_1, B_2... B_j... B_m)$ angeordnet ist, die durch zwei parallele Flächen $(\Sigma_A; \Sigma_B)$ getragen werden, auf die der zu messende Druck derart aufgebracht wird, daß er mittels einer Diode in Reihe mit einem ersten Punkt der ersten Leiterbahn $(A_1, A_2... A_i... A_n)$ und mit einem zweiten Punkt der zweiten Leiterbahn $(B_1, B_2... B_j... B_m)$ verbunden ist, und daß der Strom, der ihn durchquert mit einer Richtung im wesentlichen senkrecht zu den beiden parallelen Oberflächen $(\Sigma_A; \Sigma_B)$ in Verbindung mit der aufgebrachten Schaltkreisspannung verwendet wird, um den Widerstand des druckempfindlichen Elements zu messen, das durch den verformbaren Leiter $(C_{i,j})$ gebildet wird und anschließend des auf dasselbe Element angebrachten Druckes, und daß die Aufeinanderfolge der Druckmessung auf die verschiedenen Punkte des druckempfindlichen Elements, das durch den verformbaren Leiter $(C_{i,j})$ gebildet wird mit Hilfe von elektronischen Unterbrechern $(C_{Ai}; C_{Bi})$ verwirklicht wird, die beispielsweise MOS-Technologie verwenden, und die durch Multiplexen gesteuert werden, derart, daß alle druckempfindlichen Elemente, die durch den genannten verformbaren Leiter $(C_{i,j})$ abwechselnd mit den Klemmen einer Zufuhr (2) in Reihe mit einem Widerstand (3) verbunden sind, der die Messung des abgegebenen Stromes ermöglicht; dadurch gekennzeichnet, daß diese druckempfindlichen Elemente piezometrische bzw. piezoresistive Elemente sind, daß die Diode eine Zenerdiode ist, und daß dem piezometrischen Netz ein anderes Netz, diesmal jedoch aus thermometrischen bzw. thermoresistiven Elementen hinzugefügt ist, die auf analoge Weise funktionieren, jedoch als empfindliches Element $(D_{i,j})$ Thermistoren oder jegliche anderen resistiven Elemente verwendet, die temperaturempfindlich sind, was erlaubt, die Druckmessung der Temperatureinwirkungen zu korrigieren.

2. Vorrichtung nach Anspruch 1, dadurch gekennzeichnet, daß das piezometrische Element $(C_{i,j})$ mit einem Transformator verbunden ist, der einen Kern mit rechteckigem Zyklus bzw. rechteckiger Schwingung aufweist, von dem die Primärwicklung von den Leitern $(A_i, B_j)$ gebildet ist, die geeignet durch rechtwinklige Impulse mit kalibrierten Amplituden derart gespeist werden, daß das Vorhandensein von Impulsen an einem einzigen der beiden Leiter nicht ausreicht, um die Veränderung der Magnetisierung des Kernes hervorzurufen, und von dem die Sekundärwicklung von dem piezometrischen Element gebildet ist, dessen Widertand durch den in den Schaltkreis $(A_i, B_j)$ ausgegebenen Strom zum Zeitpunkt der Veränderung in der Magnetisierung des Kerns gemessen wird, und dessen Wert erlaubt, den auf den Koordinationspunkt ($C_{i,j}$) aufgebrachten Druck zu erhalten.

3. Vorrichtung nach Anspruch 1 oder 2, dadurch gekennzeichnet, daß sie verwendet wird für medizinische Zwecke bestehend in der Analyse von Drücken und Temperaturen, die bei Berührung eines menschlichen Körpers vorhanden sind.

4. Vorrichtung nach den Ansprüchen 1, 2 oder 3, dadurch gekennzeichnet, daß sie bei Robotern als künstliche Haut verwendet wird, wobei sie gleichermaßen gut druck- und temperaturempfindlich ist.

5. Vorrichtung nach Anspruch 1 oder 2, dadurch gekennzeichnet, daß das piezometrische Element aus einem Elastomerleiter gebildet ist.

6. Vorrichtung nach Anspruch 1 oder 2, dadurch gekennzeichnet, daß das piezometrische Element aus einer leitenden Flüssigkeit gebildet ist, das in einer elastischen Hülle angeordnet ist.

7. Vorrichtung nach Anspruch 2, dadurch gekennzeichnet, daß der Sekundärbereich des Transformators mit Ferritkern aus einer leitenden Flüssigkeit gebildet ist, in der der Kern eingetaucht ist.

FIG.1

FIG.2

FIG.3

FIG.4